(19) Europäisches Patentamt
European Patent Office
Office européen des brevets

(11) **EP 4 125 004 A1**

(12) **EUROPEAN PATENT APPLICATION**

(43) Date of publication:
**01.02.2023 Bulletin 2023/05**

(21) Application number: **22184498.8**

(22) Date of filing: **12.07.2022**

(51) International Patent Classification (IPC):
**G06N 3/04** *(2006.01)* **G06F 21/55** *(2013.01)*
**G06N 3/08** *(2006.01)*

(52) Cooperative Patent Classification (CPC):
**G06N 3/0454; G06F 21/554; G06N 3/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.07.2021 JP 2021115877**

(71) Applicant: **Kubota, Nozomu**
**Minato-ku, Tokyo 108-0075 (JP)**

(72) Inventor: **Kubota, Nozomu**
**Minato-ku, Tokyo 108-0075 (JP)**

(74) Representative: **EIP**
**Fairfax House**
**15 Fulwood Place**
**London WC1V 6HU (GB)**

(54) **INFORMATION PROCESSING APPARATUS, INFORMATION PROCESSING METHOD, AND STORAGE MEDIUM**

(57)     A defense can be made appropriately against an arbitrary attack on data used in learning or inference. An information processing apparatus includes a memory and at least one processor. The memory stores a first inference model using a neural network and a plurality of defense algorithms. The at least one processor performs acquisition of prescribed data, input of the prescribed data to the first inference model to perform inference processing, the first inference model being learned using learning data including respective data and respective result data obtained by solving prescribed problems using the respective data, detection of a possibility as to whether a prescribed attack has been made on the prescribed data, specification of, when the possibility of the prescribed attack is detected, a first defense algorithm capable of making a defense against the prescribed attack from among the plurality of defense algorithms on a basis of the prescribed data on which the prescribed attack has been made, and application of the first defense algorithm to the inference processing.

**Fig. 3**

EP 4 125 004 A1

**Description**

**Background**

Field

The present invention relates to an information processing apparatus, an information processing method, and a storage medium.

Description of Related Art

In recent years, defense methods against adversarial attacks have been studied in machine learning. For example, Patent Publication JP-A-2021-96854 discloses a method for filtering an output data sequence from a first machine learning system on the basis of an adversarial label in order to generate an adversarial label for classifying a previous input sequence on the basis of the prediction that an input sequence is a perturbed version of a plurality of frames of sensor data, discriminate an output data sequence generated by a first machine learning system on the basis of the input sequence, and prevent an actuator system from being controlled by control data based on the output data sequence.

Citation List

Patent Document

Patent Publication JP-A-2021-96854

**Summary**

Here, in the related art, when an adversarial attack such as perturbation is made on the data of a learning object or an inference object, the reception of the adversarial attack is detected according to a prescribed method. However, a prescribed defense method is employed regardless of what adversarial attack is made. Meanwhile, adversarial attacks are being diversified, and therefore the related art is incapable of appropriately making a defense against arbitrary adversarial attacks.
Therefore, the present invention has an object of providing an information processing apparatus, an information processing method, and a storage medium enabled to appropriately make a defense against an arbitrary attack on data used in learning or inference.
An aspect of the present invention provides an information processing apparatus including a memory and at least one processor,

the memory storing
a first inference model using a neural network, and
a plurality of defense algorithms,
the at least one processor performing
acquisition of prescribed data,
input of the prescribed data to the first inference model to perform inference processing, the first inference model being learned using learning data including respective data and respective result data obtained by solving prescribed problems using the respective data,
detection of a possibility as to whether a prescribed attack has been made on the prescribed data,
specification of, when the possibility of the prescribed attack is detected, a first defense algorithm capable of making a defense against the prescribed attack from among the plurality of defense algorithms on a basis of the prescribed data on which the prescribed attack has been made, and
application of the first defense algorithm to the inference processing.

According to the present invention, it is possible to provide an information processing apparatus, an information processing method, and a storage medium enabled to appropriately make a defense against an arbitrary attack on data used in learning or inference.

**Brief Description of Drawings**

FIG. 1 is a diagram showing an example of a system configuration according to an embodiment;

FIG. 2 is a diagram showing an example of the physical configurations of an information processing apparatus according to the embodiment;

FIG. 3 is a diagram showing an example of the processing blocks of the server according to the embodiment;

FIG. 4 is a diagram for describing the concept of processing according to the embodiment;

FIG. 5A is a diagram showing an example of corresponding data according to the embodiment;

FIG. 5B is a diagram showing an example of corresponding data according to the embodiment;

FIG. 5C is a diagram showing an example of corresponding data according to the embodiment;

FIG. 6 is a sequence diagram showing an example of processing by the system according to the present embodiment;

FIG. 7 is a flowchart showing an example of defense control processing by the server according to the present embodiment; and

FIG. 8 is a diagram showing experimental results according to the embodiment.

**Detailed Description**

An embodiment of the present invention will be described with reference to the accompanying drawings. Note that components denoted by the same symbols in respective figures have the same or similar configurations.

Embodiment

System Configuration

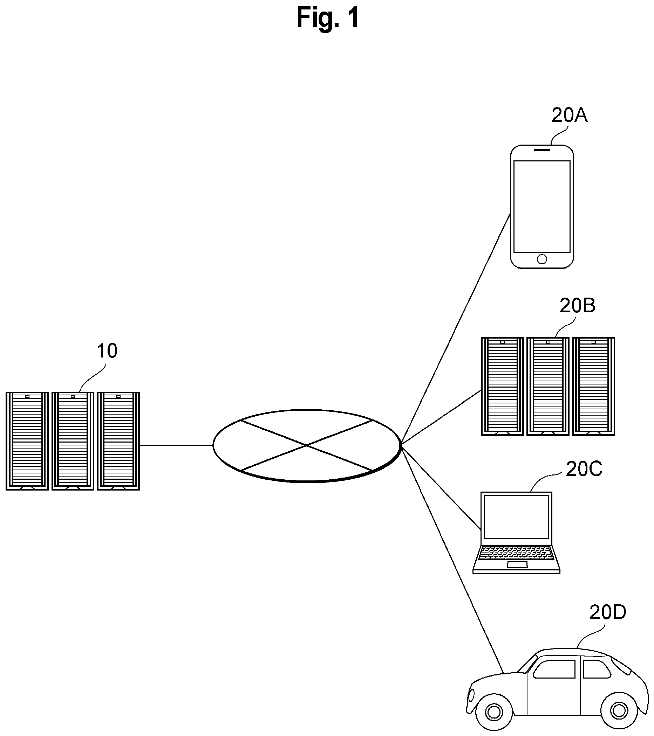

FIG. 1 is a diagram showing an example of a system configuration according to the embodiment. In the example shown in FIG. 1, a server 10 and respective edge terminals (or user terminals) 20A, 20B, 20C, and 20D are connected to each other so as to be capable of transmitting and receiving data to and from each other via a network. The edge terminals will also be shown as edge terminals 20 when they are not individually distinguished from each other.

The server 10 is an information processing apparatus capable of collecting and analyzing data and may be composed of one or a plurality of information processing apparatuses. The edge terminals 20 are information processing apparatuses such as smart phones, tablet terminals, servers, and connected cars capable of acquiring data. Note that the edge terminals 20 may also be apparatuses that are connected to invasive or non-invasive electrodes for sensing brain waves and capable of analyzing and transmitting/receiving brain wave data.

In the system shown in FIG. 1, the server 10 acquires the prescribed data of a learning object or an inference object from the respective edge terminals 20 and outputs the result data of learning or inference using a prescribed learning model or a prescribed learned inference model. The respective edge terminals 20 acquire the result data corresponding to the output inference object data.

When acquiring inference object data from the respective edge terminals 20, the server 10 performs inference processing on the data. The inference processing includes at least one of processing for solving a classification problem, a regression analysis problem, a clustering problem, an optimization problem, or the like. At this time, the server 10 detects a possibility as to whether a prescribed attack has been made on the inference object data. The prescribed attack includes, for example, an attack to perturb the data on the basis of a prescribed adversarial attack algorithm.

When detecting the fact that the prescribed attack has been made, the server 10 applies a prescribed defense method corresponding to the prescribed attack to the inference processing. It has been known that Pruning is performed as an example of the defense method (Te Juin Lester Tan, Reza Shokri, "Bypassing Backdoor Detection Algorithms in Deep Learning," IEEE European Symposium on Security and Privacy 2020, p175-183, 6 Jun 2020 (last revised)). According to the paper method, the Pruning can be a defense method against an adversarial attack. However, further effective attack methods have been disclosed against the Pruning defense method. Accordingly, strategies for applying effective defense methods against adversarial attacks employing various methods become important.

Therefore, in the present embodiment, the server 10 specifies an appropriate defense method (for example, a defense algorithm) on the basis of prescribed data, the feature amounts of the prescribed data, a specified prescribed attack, or the like and applies the specified defense method to inference processing when a prescribed attack is detected. Thus, it is possible to appropriately make a defense against a detected arbitrary attack. Hereinafter, the configurations of the respective apparatuses of the present embodiment will be described.

Hardware Configuration

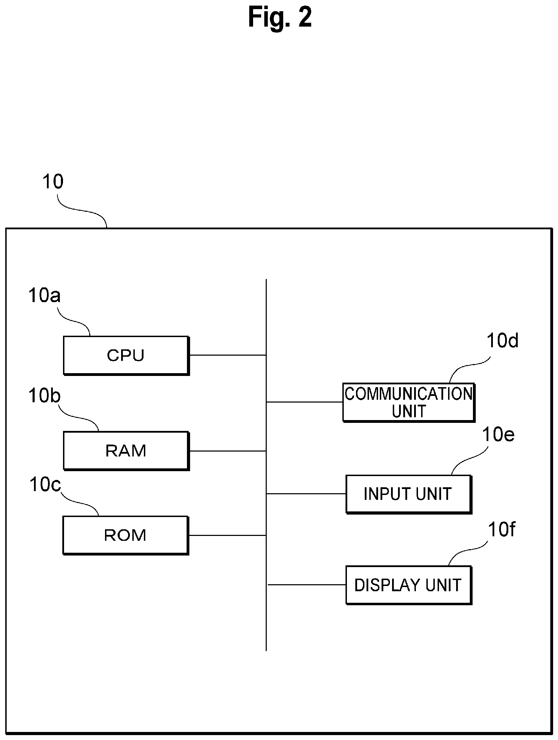

FIG. 2 is a diagram showing an example of the physical configurations of the information processing apparatus 10 according to the embodiment. The information processing apparatus 10 has a CPU (Central Processing Unit) 10a corresponding to an operation unit, a RAM (Random Access Memory) 10b corresponding to a storage unit, a ROM (Read only Memory) 10c corresponding to a storage unit, a communication unit 10d, an input unit 10e, and a display unit 10f. These respective configurations are connected so as to be capable of transmitting and receiving data to and from each other via a bus.

The present embodiment will describe a case in which the information processing apparatus 10 is constituted by one computer, but the information processing apparatus 10 may be realized by a combination of a plurality of computers or a plurality of operation units. Further, the configurations shown in FIG. 1 are given as an example. The information processing apparatus 10 may have configurations other than these configurations or may not have a part of these configurations.

The CPU 10a is an example of a processor and is a control unit that performs control associated with the running of a program stored in the RAM 10b or the ROM 10c or performs the operation and processing of data. The CPU 10a is, for example, an operation unit that runs a program (learning program) to perform learning using a learning model capable of setting the initial values of parameters. The CPU 10a receives various data from the input unit 10e or the communication unit 10d and displays the operation results of the data on the display unit 10f or stores the same in the RAM 10b.

The RAM 10b is a data rewritable type among the storage units and may be constituted by, for example, a semiconductor storage element. The RAM 10b may store a program run by the CPU 10a, respective learning models, respective learned inference models, data associated with the feature amounts of inference object data, at least one attack detection method for detecting attacks, and/or data showing the corresponding relationship between the feature amounts and defense specification information (defense IDs) for specifying prescribed defense algorithms, or the like. Note that these data items are given as an example. The RAM 10b may store data other than these data items or may not store a part of these data items.

The ROM 10c is a data readable type among the storage units and may be constituted by, for example, a semiconductor storage element. The ROM 10c may store, for example, a defense control program or data that is not rewritten.

The communication unit 10d is an interface that serves to connect the information processing apparatus 10 to other equipment. The communication unit 10d may be connected to a communication network such as the Internet.

The input unit 10e serves to receive data input from a user and includes, for example, a keyboard and a touch panel.

The display unit 10f serves to visually display the operation result of the CPU 10a and may be constituted by, for example, a LCD (Liquid Crystal Display). The display of an operation result by the display unit 10f can contribute to an XAI (eXplainable AI). The display unit 10f may display, for example, a learning result or data associated with learning.

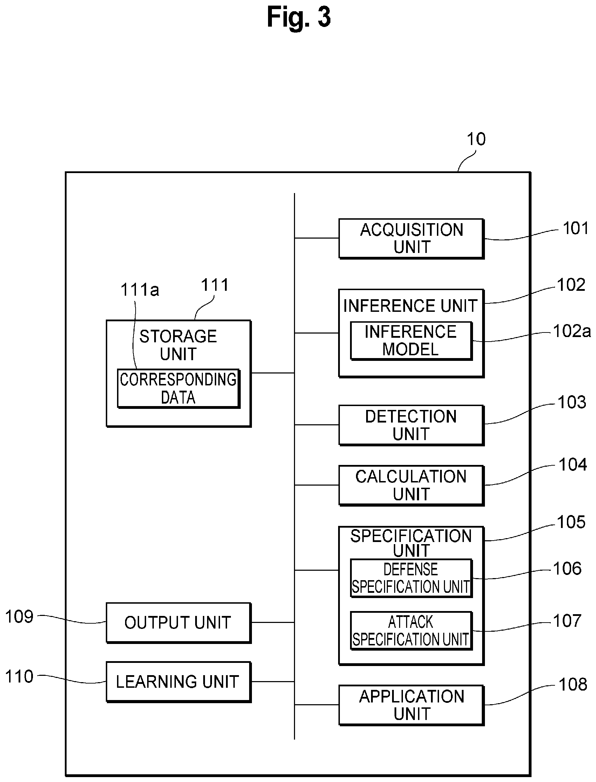

The learning program or the defense control program may be provided in a state of being stored in a non-transitory computer-readable storage medium such as the RAM 10b and the ROM 10c or may be provided via a communication network connected by the communication unit 10d. In the information processing apparatus 10, various operations that will be described later with reference to FIG. 3 are realized when the CPU 10a runs the learning program or the defense control program. Note that these physical configurations are given as an example and independent configurations may not be necessarily provided. For example, the information processing apparatus 10 may include an LSI (Large-Scale Integration) in which the CPU 10a and the RAM 10b or the ROM 10c are integrated with each other. Further, the information processing apparatus 10 may include a GPU (Graphical Processing Unit) or an ASIC (Application Specific Integrated Circuit).

Note that the configurations of the information processing apparatuses 20 are the same as those of the information processing apparatus 10 shown in FIG. 2 and therefore their descriptions will be omitted. Further, the information processing apparatus 10 and the information processing apparatuses 20 may only have the CPU 10a, the RAM 10b, and the like that are basic configurations for performing data processing and may not have the input unit 10e and the display unit 10f. Further, the input unit 10e and the display unit 10f may be connected from an outside by an interface.

Processing Configurations

FIG. 3 is a diagram showing an example of the processing blocks of the information processing apparatus (server) 10 according to the embodiment. The information processing apparatus 10 includes an acquisition unit 101, an inference unit 102, a detection unit 103, a calculation unit 104, a specification unit 105, an application unit 108, an output unit 109, a learning unit 110, and a storage unit 111. The information processing apparatus 10 may be constituted by a general-purpose computer.

The acquisition unit 101 acquires prescribed data from each of the edge terminals 20 (also called "first information processing apparatuses"). The prescribed data is, for example, inference object data. Further, the prescribed data may also be a prescribed data set. The data set includes, for example, at least any of image data, sequence data, and text data. Here, the image data includes static-image data and moving-image data. The sequence data includes voice data, stock price data, or the like.

The inference unit 102 inputs prescribed data acquired by the acquisition unit 101 to an inference model (first inference model) 102a to perform inference processing. For example, the inference model 102a is a learned model learned using learning data including the respective data of a learning object and respective result data obtained by solving a prescribed problem using the respective data. The prescribed problem includes at least one of a classification problem, a regression analysis problem, a clustering problem, and an optimization problem as described above but is not limited to these examples.

The inference model 102a may also be, for example, a prescribed inference model using a neural network. The prescribed inference model 102a includes, for example, at least one of an image recognition model, a sequence data analysis model, a robot control model, a reinforcement learning model, a voice recognition model, a voice generation model, an image generation model, a natural language processing model, and the like. Further, a specific example of the prescribed inference model 102a may be any of a CNN (Convolutional Neural Network), a RNN (Recurrent Neural Network), a DNN (Deep Neural Network), a LSTM (Long Short-Term Memory), a bidirectional LSTM, a DQN (Deep Q-Network), a VAE (Variational AutoEncoder), a GANs (Generative Adversarial Networks), a flow-based generation model, and the like. Note that the inference unit 102 may select a corresponding prescribed inference model on the basis of the feature or the type of inference object data.

The detection unit 103 detects a possibility as to whether a prescribed attack has been made on prescribed data using a known technology. For example, the detection unit 103 may use a detection technology described in Patent Publication JP-A-2021-96854 or a learning model that has learned learning data including data on which various adversarial attacks have been made and an answer label by supervised learning. Further, the detection unit 103 may detect a possibility as to whether a prescribed attack associated with learning has been made on prescribed data using a prescribed detection method.

When the possibility that a prescribed attack has been made is detected by the detection unit 103, the calculation unit 104 calculates the feature amount of prescribed data on which the prescribed attack has been possibly made. For example, the feature amount includes a feature amount associated with the prescribed attack. Specifically, when the prescribed data is perturbed as the prescribed attack, the calculation unit 104 calculates a feature amount associated with the perturbation from the prescribed data in which the possibility of the perturbation has been detected.

For example, as an available feature amount showing the feature of prescribed data on which an attack has been made, the calculation unit 104 may calculate Nr_attributes (the number attributes), Nr_sym_attributes (the number of name attributes), Nr_num_attributes (the number of numeric attributes), Nr_examples (the number of instances), Nr_class (the number of classes), Default Accuracy (the proportion of the most classes), Missing Value_Total (the number (total) of deficit values), Missing Value_Relative (the number (proportion) of deficit values), Mean_Absolute_Skew (an average skew of a numeric attribute), Mean Kurtosis (an average kurtosis of a numeric attribute), NumAttrsWithOulies (the number of attributes having an outlier value), or the like.

Further, the calculation unit 104 may change a calculated feature amount according to the type of prescribed data. For example, the calculation unit 104 may use a DC component after DCT (Discrete Cosine Transform) as a feature amount with respect to image data or may use a maximum power spectrum after FFT (Fast Fourier Transform) as a feature amount with respect to voice data.

When the possibility that a prescribed attack has been made is detected by the detection unit 103, the specification unit 105 specifies a first defense algorithm capable of making a defense against the prescribed attack from among a plurality of defense algorithms on the basis of prescribed data on which the prescribed attack has been possibly made. Here, a method for specifying a defense algorithm is mainly classified into six methods.

(1) First Method Based on Corresponding Data Not Specifying Attack and Feature Amounts of Prescribed Data

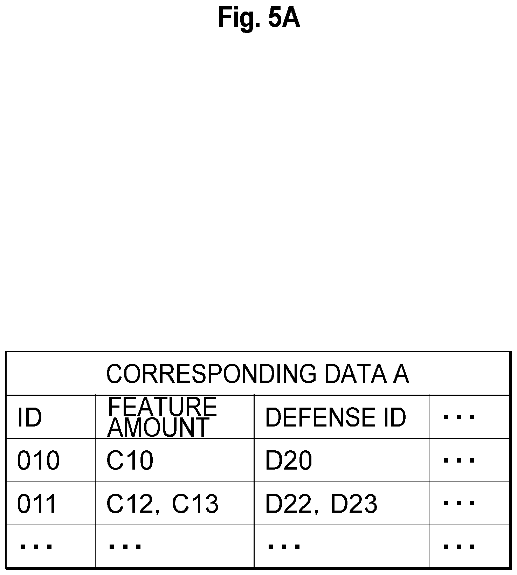

According to a first method, a simulation or the like is performed in advance, and corresponding data A in which the feature amounts of prescribed data on which an attack has been made and the defense specification information (defense IDs) of defense algorithms that have been applied to the prescribed data and have had an effect are associated with each other is generated (for example, FIG. 5A). For example, an adversarial attack to give prescribed perturbation is given to respective image data, respective defense algorithms are applied to the respective image data on which the attack has been made, and defense algorithms enabling appropriate classification are selected. At this time, feature amounts associated with the perturbation of the images on which the adversarial attack has been made and the defense IDs of the corresponding defense algorithms are associated with each other.

Using the corresponding data described above, the defense specification unit 106 of the specification unit 105 specifies defense IDs corresponding to feature amounts from the feature amounts of data in which the possibility of an attack has been detected. Thus, when the possibility of an attack is detected, the specification unit 105 is enabled to apply an appropriate defense method against the method of the attack.

(2) Second Method Based on Corresponding Data Specifying Attack and Feature Amounts of Prescribed Data

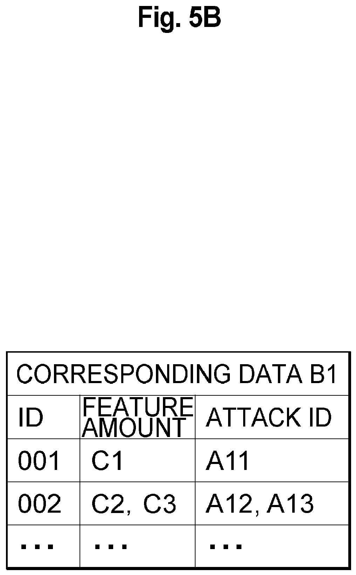

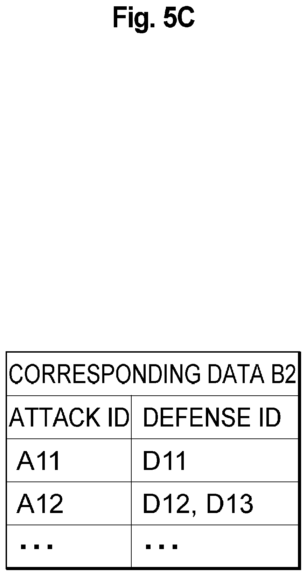

According to a second method, a simulation or the like is performed in advance, the feature amounts of prescribed data on which an attack has been made are found, and corresponding data B1 in which the feature amounts and the attack specification information (attack IDs) of attack algorithms that have attacked the prescribed data are associated with each other is generated (for example, FIG. 5B). For example, an adversarial attack to give prescribed perturbation is given to respective image data, and feature amounts associated with the perturbation of the images on which the adversarial attack has been made and the attack IDs of corresponding attack algorithms are associated with each other. Further, when defense algorithms effective for the respective attack algorithms are specified by a simulation or the like, corresponding data B2 in which the attack IDs and defense IDs capable of making a defense against the attack IDs are associated with each other is generated (for example, FIG. 5C).

Using the corresponding data B1 described above, the attack specification unit 107 of the specification unit 105 specifies attack IDs from the feature amounts of data in which the possibility of an attack has been detected. Using the corresponding data B2 described above, the defense specification unit 106 of the specification unit 105 specifies defense IDs corresponding to attack IDs. Thus, when the possibility of an attack is detected, the specification unit 105 is enabled to specify an attack method and applying an appropriate defense method against the specified attack method.

(3) Third Method Based on Inference Model Not Specifying Attack and Prescribed Data

According to a third method, the specification unit 105 may input prescribed data to a second inference model that is generated by supervised learning using learning data including respective data on which a prescribed attack has been made and respective defense algorithms applied to the respective data to predict first defense algorithms. For example, the defense specification unit 106 may have a second inference model and predict and specify first defense algorithms.

For example, the defense specification unit 106 may set a loss function using the probability that a prescribed attack becomes successful (for example, data is falsely classified) with respect to the prescribed data to which defense algorithms have been applied and specify defense algorithms where the loss function satisfies a condition (for example, the loss function becomes minimum). For example, the defense specification unit 106 outputs a logit to respective defense algorithms using a soft max function and specifies a prescribed number of higher-level defense algorithms as first defense algorithms. Note that the prescribed number represents one or more numbers. Further, the defense specification unit 106 may weight the original inference accuracy of the second inference model and the probability of the success of a prescribed attack on the second inference model to set a loss function.

Thus, even if an attack method by which an attack has been possibly made is not specified, it is possible to predict and specify an appropriate defense method on the basis of prescribed data on which an attack has been made when the possibility of the attack is detected.

(4) Fourth Method Based on Inference Model Specifying Attack and Prescribed Data

According to a fourth method, the attack specification unit 107 of the specification unit 105 may input prescribed data to a third inference model that is generated by supervised learning using learning data including respective attack algorithms and respective data on which respective attacks based on the respective attack algorithms have been made to predict first attack algorithms.

For example, the attack specification unit 107 may set a loss function using the probability that a prescribed attack is at least one of respective attack algorithms using prescribed data on which the prescribed attack has been made and specify attack algorithms where the loss function satisfies a condition (for example, the loss function becomes minimum) as first attack algorithms. For example, the attack specification unit 107 outputs a logit to respective attack algorithms using a soft max function and specifies a prescribed number of higher-level attack algorithms as first attack algorithms. Note that the prescribed number represents one or more numbers.

Further, the defense specification unit 106 of the specification unit 105 may input first attack algorithms to a sixth inference model that is generated by supervised learning using learning data including respective attack algorithms and respective data in which respective defense algorithms are applied to respective data on which attacks have been made by the respective attack algorithms to predict first attack algorithms.

For example, the defense specification unit 106 may set a loss function using the probability of the success of a prescribed attack when respective defense algorithms are applied to prescribed data on which the prescribed attack has been made and specify defense algorithms where the loss function satisfies a condition (for example, the loss function becomes minimum) as first defense algorithms.

Thus, it is possible to predict an attack method by which an attack has been possibly made and predict and specify an appropriate defense method on the basis of the prescribed attacked method.

(5) Fifth Method Based on Inference Model Not Specifying Attack and Feature Amounts of Prescribed Data

According to a fifth method, the specification unit 105 may input calculated feature amounts to a fourth inference model that is generated by supervised learning using learning data including the respective feature amounts of respective data and respective defense algorithms corresponding to the respective feature amounts to predict first defense algorithms.

For example, the defense specification unit 106 may set the same loss function as that of the third method and specify defense algorithms where the loss function satisfies a condition (for example, the loss function becomes minimum). Further, the defense specification unit 106 may weight the original inference accuracy of the fourth inference model and the probability of the success of a prescribed attack on the fourth inference model to set a loss function.

Thus, even if an attack method by which an attack has been possibly made is not specified, it is possible to predict and specify an appropriate defense method on the basis of prescribed data on which an attack has been made when the possibility of the attack is detected.

(6) Sixth Method Based on Inference Model Specifying Attack and Feature Amounts of Prescribed Data

According to a sixth method, the attack specification unit 107 of the specification unit 105 may input prescribed data to a fifth inference model that is generated by supervised learning using learning data including the respective feature amounts of respective data and respective attack algorithms corresponding to the respective feature amounts to predict first attack algorithms.

For example, the attack specification unit 107 may set the same loss function as that of the third method and specify attack algorithms where the loss function satisfies a condition (for example, the loss function becomes minimum) as first attack algorithms.

Further, the defense specification unit 106 of the specification unit 105 may input first attack algorithms to the sixth inference model that is generated by supervised learning using learning data including respective attack algorithms and respective data in which respective defense algorithms are applied to respective data on which attacks have been made by the respective attack algorithms to predict first defense algorithms.

For example, the defense specification unit 106 may set a loss function using the probability of the success of a prescribed attack when respective defense algorithms are applied to prescribed data on which the prescribed attack has been made and specify defense algorithms where the loss function satisfies a condition (for example, the loss function becomes minimum) as first defense algorithms.

Thus, it is possible to predict an attack method by which an attack has been possibly made and predict and specify an appropriate defense method on the basis of the predicted attacked method.

The application unit 108 applies first defense algorithms specified by the specification unit 105 according to any of the first to sixth methods to the inference processing of the inference unit 102. For example, the application unit 108 may apply the first defense algorithms as the preprocessing of inference, may apply the first defense algorithms to the parameter adjustment of the inference processing or the like, or may apply the first defense algorithms as the post-processing of the inference processing depending on the properties of the first defense algorithms. Specifically, the application unit 108 may determine to which of the pre-processing, the inference processing itself, and the post-processing the specified first defense algorithms are applied and appropriately apply the first defense algorithms on the basis of a determination result.

By the above processing, the server 10 is enabled to detect a possibility as to whether an adversarial attack has been made on the basis of prescribed data on which inference processing is to be performed and apply a defense method appropriately specified against the detected arbitrary adversarial attack to the inference processing.

The output unit 109 outputs, via the communication unit 10d, the result data of inference by the inference unit 102 to the edge terminal 20 that has transmitted prescribed data. For example, the output unit 109 outputs result data including at least one of a classification result, a regression analysis result, a clustering result, an optimization result, and the like obtained by inference processing.

The learning unit 110 sets learning models for generating the respective inference models described above and performs supervised learning on respective learning data. The learning unit 110 outputs the learning models in which parameters have been adjusted to the inference unit 102 or the specification unit 105 as the inference models. For example, the learning unit 110 may perform supervised learning using learning data including learning object data and the answer labels of inference and generate the inference model (first inference model) 102a. Note that the learning unit 110 may be provided in another apparatus. In this case, the respective inference models are generated by the other apparatus, and the server 10 acquires the respective inference models from the other apparatus.

Further, the learning unit 110 may set a loss function for reducing the probability of the success of an attack on respective defense processing (for example, the probability of erroneous classification) and perform supervised learning using learning data including prescribed data on which attacks have been made by respective attack algorithms, respective defense algorithms, and respective inference result data obtained when defense processing is performed by the respective defense algorithms. By the learning, the second inference model is generated.

Further, the learning unit 110 may set a loss function for increasing the probability of the coincidence between prescribed data and prescribed attack algorithms and perform supervised learning using learning data including respective attack algorithms and respective data on which respective attacks based on the respective attack algorithms have been made. By the learning, the third inference model is generated.

Further, the learning unit 110 may set a loss function for reducing the probability of the success of an attack on respective defense processing and perform supervised learning using learning data including the respective feature amounts of respective prescribed data, respective defense algorithms corresponding to the respective feature amounts, and respective inference result data obtained when defense processing is performed by the respective defense algorithms. By the learning, the fourth inference model is generated.

Further, the learning unit 110 may set a loss function for increasing the probability of the coincidence between prescribed data and prescribed attack algorithms and perform supervised learning using learning data including the respective feature amounts of respective prescribed data, respective attack algorithms corresponding to the respective feature amounts, and respective data on which respective attacks based on the respective attack algorithms have been made. By the learning, the fifth inference model is generated.

Further, the learning unit 110 may set a loss function for reducing the probability of the success of an attack on respective defense processing and perform supervised learning using learning data including respective attack algorithms, respective data in which respective defense algorithms are applied to respective data on which attacks have been made by the respective attack algorithms, and respective inference result data obtained when defense processing is performed by the respective defense algorithms. By the learning, the sixth inference model is generated.

The storage unit 111 stores data associated with the inference unit 102, the specification unit 105, the learning unit 110, or the like. For example, an appropriate defense algorithm is analyzed and learned in advance with respect to data to which an attack algorithm corresponding to a prescribed attack has been added, and the corresponding data 111a including the feature amount of data obtained when a prescribed attack is made and a defense algorithm is stored in the storage unit 111.

Conceptual Diagram

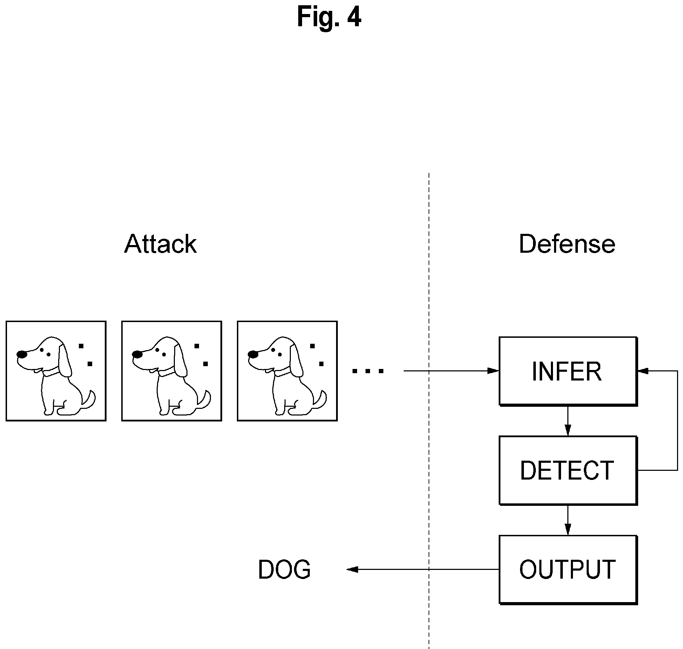

FIG. 4 is a diagram for describing the concept of processing according to the embodiment. In an example shown in FIG. 4, an image is used as prescribed data, a CNN is used as an inference model, and an adversarial attack to give perturbation such as a one-pixel attack is used as a prescribed attack. Further, the edge terminal 20 makes an attack, while the server 10 makes a defense.

The edge terminal 20 gives perturbation to prescribed image data and transmits the image data including the perturbation to the server 10. By repeatedly giving the perturbation to the image data, the edge terminal 20 is enabled to reduce the prediction accuracy of a learning model on the side of the server 10 or predict and construct an inference model.

The server 10 performs inference processing on the prescribed data acquired from the edge terminal 20. In the case of FIG. 4, the server 10 outputs the classification result of the image data as a prediction result (inference result). Further, in the example shown in FIG. 4, a dog is included in the image data. Therefore, if no perturbation is given to the image data, the dog is output as a classification result. However, when perturbation is given to the image data of the dog, the server 10 is not enabled to perform appropriate classification without any defense processing and returns a different classification result such as a frog and a snake.

Therefore, the server 10 detects an adversarial attack using a known technology to detect the adversarial attack. Further, using an inference model (classification prediction model) generated by supervised learning using images generated by various adversarial attacks and classification results as learning data, the server 10 may input prescribed data and predict a possibility as to whether an adversarial attack has been made.

When detecting the possibility that the adversarial attack has been made, the server 10 specifies appropriate defense algorithms using any of the first to sixth methods described above on the basis of the image data in which perturbation has been predicted. Thus, since appropriate defense algorithms are applied to inference processing, it is possible to prevent erroneous classification and increase the possibility of returning a result in which the image data is correctly classified as the dog.

Data Examples

FIGS. 5A to 5C are diagrams showing an example of the corresponding data 111a according to the embodiment. In an example shown in FIG. 5A, corresponding data A includes the feature amounts of inference object data and defense specification information (defense IDs) for specifying defense algorithms presumed to be effective for attack algorithms derived from the feature amounts in association with information (IDs) for specifying the inference object data. For example, the corresponding data A shown in FIG. 5A is used in the first method described above.

In an example shown in FIG. 5B, corresponding data B1 includes the feature amounts of inference object data and attack specification information (attack IDs) for specifying attack algorithms derived from the feature amounts in association with information (IDs) for specifying the inference object data. Further, corresponding data B2 includes defense IDs in association with the attack IDs.

Here, the feature amounts are data items associated with prescribed attacks included in the inference object data, and at least one of the feature amounts described above may only be registered. Further, the corresponding data shown in FIGS. 5A to 5C may be put to practical use by, for example, a learning model used in deep learning.

Attack Method, Defense Method, and Specific Example of Detection Processing

Next, an attack method, a defense method, and detection processing applicable to the present embodiment will be listed below, but other methods and processing may be employed.

Examples of Attack Methods

Evasive Attack (Evasion)

Auto-Attack (Croce and Hein, 2020)

Evasive Attack (White-Box type)

Auto Projected Gradient Descent (Auto-PGD) (Croce and Hein, 2020), Shadow Attack (Ghiasi et al., 2020), Wasserstein Attack (Wong et al., 2020), Imperceptible, Robust, and Targeted Adversarial Examples for Automatic Speech Recognition (Qin et al., 2019), Brendel & Bethge Attack (Brendel et al., 2019), Targeted Universal Adversarial Perturbations (Hirano and Takemoto, 2019), Audio Adversarial Examples: Targeted Attacks on Speech-to-Text (Carlini and Wagner, 2018), High Confidence Low Uncertainty (HCLU) Attack (Grosse et al., 2018), Iterative Frame Saliency (Inkawhich et al., 2018), DPatch (Liu et al., 2018), Robust DPatch (Liu et al., 2018, (Lee and Kolter, 2019)), ShapeShifter (Chen et al., 2018), Projected Gradient Descent (PGD) (Madry et al., 2017), NewtonFool (Jang et al., 2017), Elastic Net (Chen et al., 2017), Adversarial Patch (Brown et al., 2017), Decision Tree Attack (Papernot et al., 2016), Carlini & Wagner (C&W) L_2 and L_inf attack (Carlini and Wagner, 2016), Basic Iterative Method (BIM) (Kurakin et al., 2016), Jacobian Saliency Map (Papernot et al., 2016), Universal Perturbation (Moosavi-Dezfooli et al., 2016), Feature Adversaries (Sabour et al., 2016), DeepFool (Moosavi-Dezfooli et al., 2015), Virtual Adversarial Method (Miyato et al., 2015), Fast Gradient Method (Goodfellow et al., 2014)

Evasive Attack (Black-Box type)

Square Attack (Andriushchenko et al., 2020), HopSkipJump Attack (Chen et al., 2019), Threshold Attack (Vargas et al., 2019), Pixel Attack (Vargas et al., 2019, Su et al., 2019), Simple Black-box Adversarial (SimBA) (Guo et al., 2019), Spatial Transformation (Engstrom et al., 2017), Query-efficient Black-box (Ilyas et al., 2017), Zeroth Order Optimisation (ZOO) (Chen et al., 2017), Decision-based/Boundary Attack (Brendel et al., 2018)

Poisoning Attack (Poisoning)

Adversarial Backdoor Embedding (Tan and Shokri, 2019), Clean Label Feature Collision Attack (Shafahi, Huang et. al., 2018), Backdoor Attack (Gu et. al., 2017), Poisoning Attack on Support Vector Machines (SVM) (Biggio et al., 2013), Bullseye Polytope (Aghakhani et al., 2020)

Extraction Attack (Extraction)

Functionally Equivalent Extraction (Jagielski et al., 2019), Copycat CNN (Correia-Silva et al., 2018), Knockoff-Nets (Orekondy et al., 2018)

Attribute Inference Attack (Attribute Inference)

Attribute Inference Black-Box, Attribute Inference White-Box Lifestyle Decision Tree (Fredrikson et al., 2015), Attribute Inference White-Box Decision Tree (Fredrikson et al., 2015)

Membership Inference Attack (Membership Inference)

Membership Inference Black-Box, Membership Inference Black-Box Rule-Based, Label-Only Boundary Distance Attack (Choquette-Choo et al., 2020), Label-Only Gap Attack (Choquette-Choo et al., 2020),

Removal Attack (Model Inversion)

MIFace (Fredrikson et al., 2015)

Reconstruction Attack (Reconstruction)

Database Reconstruction

Examples of Defense Methods

Pre-Processing

InverseGAN (An Lin et al. 2019), DefenseGAN (Samangouei et al. 2018), Video Compression, Resampling (Yang et al., 2019), Thermometer Encoding (Buckman et al., 2018), MP3 Compression (Carlini, N. & Wagner, D., 2018), Total Variance Minimization (Guo et al., 2018), PixelDefend (Song et al., 2017), Gaussian Data Augmentation (Zantedeschi et al., 2017), Feature Squeezing (Xu et al., 2017), Spatial Smoothing (Xu et al., 2017), Spatial Smoothing PyTorch, Spatial Smoothing TensorFlow v2, JPEG Compression (Dziugaite et al., 2016), Label Smoothing (Warde-Farley and Goodfellow, 2016), Virtual adversarial training (Miyato et al., 2015)

Post-Processing

Reverse Sigmoid (Lee et al., 2018), Random Noise (Chandrasekaranet al., 2018), Class Labels (Tramer et al., 2016, Chandrasekaranet al., 2018), High Confidence (Tramer et al., 2016), Rounding (Tramer et al., 2016), General Adversarial Training (Szegedy et al., 2013), Madry's Protocol (Madry et al., 2017), Fast Is Better Than Free (Wong et al., 2020)

Evasive Defense (Evasion)

Defensive Distillation (Papernot et al., 2015)

Poisoning Defense (Poisoning)

Neural Cleanse (Wang et al., 2019)

Detection Processing

Evasive Detection (Evasion)

Basic detector based on inputs, Detector trained on the activations of a specific layer, Detector based on Fast Generalized Subset Scan (Speakman et al., 2018)

Poisoning Detection (Poisoning)

Detection based on activations analysis (Chen et al., 2018), Detection based on data provenance (Baracaldo et al., 2018), Detection based on spectral signatures (Tran et al., 2018)

The learning unit 110 generates the respective inference models described above using respective data in which learning object data has been attacked by respective attack algorithms including the attack methods described above, result data obtained by inference processing in which respective defense algorithms including the defense methods described above have been applied to the respective attacked data, or the like.

When detecting the possibility of a prescribed attack, the detection unit 103 is enabled to specify the type of an attack method based on what detection processing has been used to detect the possibility. For example, the detection unit 103 is enabled to specify a prescribed attack as an evasive attack when detecting the prescribed attack in evasive detection processing. Further, the detection unit 103 is enabled to specify a prescribed attack as a poisoning attack when detecting the prescribed attack in poisoning detection processing.

In this case, the specification unit 105 may specify a defense method corresponding to the type of an attack on the basis of the type of the detected attack. Further, the specification unit 105 may select and perform linear combination on a prescribed number of defense methods in descending order of logit output using the inference models described above when there are a plurality of a certain type of defense methods.

Operation

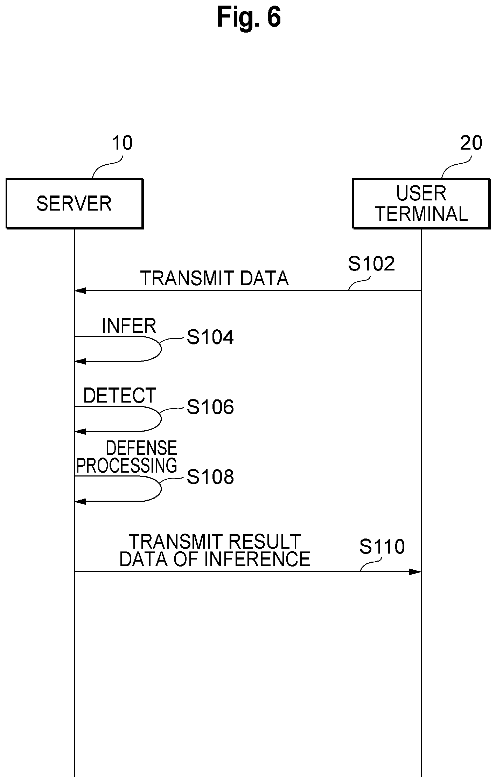

FIG. 6 is a sequence diagram showing an example of processing by the system according to the present embodiment. The processing shown in FIG. 6 is performed by the server 10 and the respective edge terminals 20. In the example of FIG. 6, only one of the edge terminals 20 is shown. However, even in a state in which the plurality of edge terminals 20 exist, the content of the processing of the respective edge terminals 20 is the same as that of the processing shown in FIG. 6. Note that the edge terminal 20 is also shown as a user terminal 20 in the example of FIG. 6.

In step S102, the user terminal 20 transmits inference object data to the server 10. The acquisition unit 101 of the server 10 acquires the inference object data from the user terminal 20.

In step S104, the inference unit 102 of the server 10 inputs the inference object data to the prescribed inference model 102a to perform inference processing.

In step S106, the detection unit 103 of the server 10 detects a possibility as to whether a prescribed attack has been made on the inference object data. The detection unit 103 expresses the possibility as, for example, a numeric value and detects the possibility that the prescribed attack has been made when the numeric value is a prescribed value or more.

In step S108, the specification unit 105 of the server 10 specifies a first defense algorithm capable of making a defense against the prescribed attack from among a plurality of defense algorithms on the basis of the prescribed data on which the prescribed attack has been possibly made. Further, the application unit 108 of the server 10 applies the first defense algorithm to the inference processing of the inference unit 102. Here, processing to specify a defense algorithm and apply the specified defense algorithm to the inference processing will be called defense processing.

In step S110, the inference processing is performed again on the same prescribed data when the defense processing is applied, and the output unit 109 of the server 10 transmits result data to the user terminal 20. When the defense processing is not applied, the output unit 109 transmits result data inferred in step S104 to the user terminal 20. Note that the processing of step S106 may be performed before the processing of step S104. In this case, since it is possible to perform the inference processing after the defense processing when the prescribed attack is detected, there is no need to perform the inference processing again.

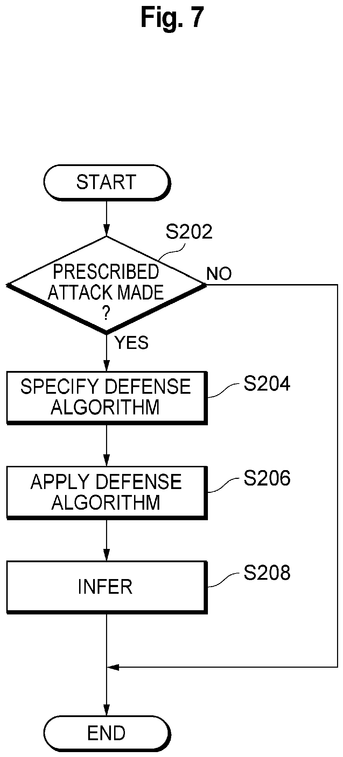

FIG. 7 is a flowchart showing an example of defense control processing by the server 10 according to the present embodiment. Processing shown in FIG. 7 is only an example of processing by the server 10.

In step S202, the specification unit 105 of the server 10 determines whether a prescribed attack has been made on prescribed data on the basis of a detection result acquired from the detection unit 103. When it is determined that the prescribed attack has been made (YES in step S202), the processing proceeds to step S204. When it is determined that the prescribed attack has not been made (NO in step S202), the specification unit 105 acquires learning object data from the user terminal 20.

In step S204, the specification unit 105 of the server 10 specifies a defense algorithm capable of making a defense against the prescribed attack according to any of the methods (1) to (6) described above.

In step S206, the application unit 108 of the server 10 applies the specified defense algorithm to inference processing.

In step S208, the inference unit 102 of the server 10 performs the inference processing to which the defense algorithm has been applied.

Thus, it is possible to appropriately make a defense against a detected arbitrary attack.

The embodiment described above intends to facilitate the understanding of the present invention and does not intend to interpret the present invention in a limited way. The respective elements and their arrangements, materials, conditions, shapes, sizes, or the like of the embodiment are not limited to those exemplified in the embodiment but may be appropriately changed.

Further, data output from the respective edge terminals 20 or the server 10 may be managed using a blockchain technology. Since it is almost impossible to perform tampering in a blockchain, the blockchain is enabled to prevent data output from respective apparatuses from being tampered and improve the reliability of a system. Further, a quantum blockchain may be used as the blockchain.

Further, the system in the embodiment described above may also be applied to Federated learning. For example, in the Federated learning, the function of the inference unit 102 of the server 10 is provided in the respective edge terminals 20, and the respective edge terminals 20 perform learning or inference. On the basis of result data, the edge terminals 20 transmit improvements to the server 10.

When a certain terminal 20 receives or gives an adversarial attack at this time, a result obtained by learning or inferring the data having received the adversarial attack becomes an erroneous result. Then, when the server 10 corrects a shared learning model using the erroneous result as an improvement, the accuracy of the learning model is degraded.

Therefore, the server 10 may cause the edge terminals 20 to have the functions of the detection unit 103, the calculation unit 104, and the specification unit 105 and cause the edge terminals 20 to detect and make a defense against a prescribed attack. Further, the server 10 may specify a prescribed defense algorithm on the basis of the features of the data of improvements and apply the defense algorithm to a shared learning model.

Further, when acquiring data from the respective edge terminals 20, the server 10 acquires the terminal IDs of the respective edge terminals 20 and stores the same together with the acquired data in association with each other. In this case, the server 10 makes data discriminable by setting a flag in the terminal ID of the edge terminal 20 that has transmitted the data in which the possibility of a prescribed attack has been detected, or the like. When receiving data from the edge terminal 20 of the terminal ID discriminated by a flag or the like, the server 10 rejects processing for the data or ignores the data. Further, when returning an inference result to the discriminated edge terminal 20, the server 10 may randomly select and return a different result. Thus, it is possible to dilute the reproducibility or the like of the learning model of the server 10 by the edge terminal 20.

Hereinafter, the content of an experiment associated with the embodiment will be described. In the present experiment, an attack method uses, for example, PGD (Projected Gradient Descent) and FGSM (Fast Gradient Sign Method), and a defense method uses, for example, Smooth Adversarial Training (X. Cihang, et al., "Smooth adversarial training," arXiv preprint arXiv:2006.14536, 2020.) as a first defense method and Self-supervised approach (N. Muzammal, et al., "A self-supervised approach for adversarial robustness," Proceedings of the IEEE/CVF Conference on Computer Vision and Pattern Recognition, 2020) as a second defense method.

In the present experiment, attack resistance is tested by experiment using image data stored in ImageNet as evaluation data when learning data is attacked by respective attack methods and defended by respective defense methods.

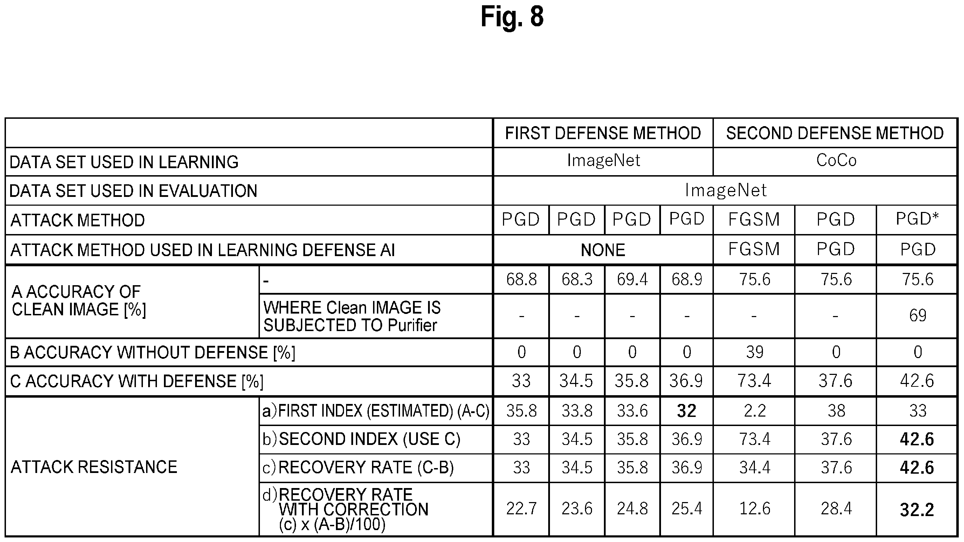

FIG. 8 is a diagram showing experimental results according to the embodiment. In an example shown in FIG. 8, a data set used in learning and evaluation is ImageNet, and four types of learning accuracy is confirmed depending on whether the gradient of a Relu function is improved with respect to Adversarial attacker and Network Optimizer as described in the paper of "Smooth Adversarial Training" in the first defense method.

Further, the training of a learning model is performed using an MS-COCO data set in the second defense method. Here, in the present experiment, learning data is attacked by PGD-200 in order to correspond to the first defense method. Then, in the present experiment, the attacked learning data is input to a learning model using Self-supervised approach to train the learning model. As evaluation data for the learned model, ImageNet is used. Further, in the present experiment, a similar experiment is also conducted using FGSM as an attack method.

Further, in the present experiment, four indexes based on the following three accuracy are used.

A: Accuracy of clean image (%)
B: Accuracy without defense (%)
C: Accuracy with defense (%)

a) First index: A - C
b) Second index: C
c) Third index: recovery rate = C - B

d) Fourth index: recovery rate with correction = third index $\times$ ((A -

B)/100)

In the example shown in FIG. 8, the first index shows a rate at which defense by the defense methods is not effective and is therefore preferably as small as possible. The second index shows a rate at which defense by the defense methods is effective and is therefore preferably as large as possible. The third index shows what extent correct classification is allowed compared with a case without defense and is therefore preferably as large as possible. The fourth index shows a value obtained by correcting the third index in consideration of accuracy without defense and is therefore preferably as large as possible.

First Defense Method

For example, accuracy of a clean image is 68.9% (A) and becomes 36.9% (C) by the defense of the first defense method against the attack of the PGD-200. It appears that the defense by the first defense method is effective to a certain extent since the accuracy is 0% (B) without defense.

In the first defense method, the first index is 32, the second index is 36.9, the third index is 36.9, and the fourth index is 25.4 when defense against the PGD-200 is most effective as attack resistance.

Second Defense Method

For example, accuracy of a clean image is 75.6% (A) and becomes 42.6% (C) by the second defense method via Purifier described in Self-supervised approach against the attack of the PGD-200. It appears that the defense by the second defense method is effective to a certain extent since the accuracy is 0% (B) without defense.

In the second defense method, the first index is 33, the second index is 42.6, the third index is 42.6, and the fourth index is 32.2 when defense against the PGD-200 is most effective as attack resistance.

From the above results, appropriate defense methods are different even when attack methods are the same and data sets are the same. Therefore, it appears that, when attack methods are different, defense methods corresponding to the respective attack methods are also different for the same data sets. In view of this, it is possible to select appropriate defense methods by using the indexes showing the accuracy of the defense methods (for example, the recovery rates described above).

For example, as a learning phase, a recovery rate is calculated in advance for each defense method with respect to a data set on which a prescribed attack has been made. Further, a recovery rate for each defense method with respect to any data set and any attack method is calculated by changing an attack method or changing a data set.

Next, supervised learning is performed using learning data having an image that has been attacked by any method and a defense method having the highest recovery rate for the image. A learned model is generated by the supervised learning.

Here, in an inference phase, a possibility as to whether any attack has been made on prescribed data is detected by a known technology (for example, at least one of Adversarial Attack Detection posted at https://paperswithcode.com/task/adversarial-attack-detection) against adversarial attacks.

When the possibility of the attack is detected, the image that has been attacked is input to the learned model and a defense method estimated to have a high recovery rate is output according to the feature of the image. The recovery rate is used in the above example, but other indexes may be used as answer levels. It is possible to take a more appropriate defense method as countermeasures by applying the estimated defense method to the learned model.

By the above experiment, the effect of the embodiment is proven, and the importance of selecting a defense method in the embodiment is confirmed. According to the embodiment, it is possible to prevent, when the possibility of an attack is detected, damage due to the attack from increasing by applying an appropriate defense method.

Supplementary Notes

Supplementary Note 1

An information processing apparatus including a memory and at least one processor,

the memory storing
a plurality of defense algorithms and
a prescribed detection method for detecting a prescribed attack,
the at least one processor performing
acquisition of prescribed data,
detection of a possibility as to whether a prescribed attack associated with learning using a neural network has been made on the prescribed data using the prescribed detection method, and
specification of, when the possibility of the prescribed attack is detected, a first defense algorithm capable of making a defense against the prescribed attack from among the plurality of defense algorithms on the basis of the prescribed data on which the prescribed attack has been possibly made.

Supplementary Note 2

The information processing apparatus according to supplementary note 1, wherein

the memory stores
an inference model using a neural network, and
the at least one processor further performs
application of the first defense algorithm to the inference model to which the prescribed data is input to perform inference processing.

Supplementary Note 3

An information processing method including, by at least one processor provided in an information processing apparatus including a memory that stores a plurality of defense algorithms and a prescribed detection method for detecting a prescribed attack:

acquiring prescribed data;
detecting a possibility as to whether a prescribed attack associated with learning has been made on the prescribed data using the prescribed detection method; and
specifying, when the possibility of the prescribed attack is detected, a first defense algorithm capable of making a defense against the prescribed attack from among the plurality of defense algorithms on the basis of the prescribed data on which the prescribed attack has been possibly made.

Supplementary Note 4

A non-transitory computer-readable storage medium storing a program for causing
at least one processor, which is provided in an information processing apparatus including a memory that stores a plurality of defense algorithms and a prescribed detection method for detecting a prescribed attack, to perform:

acquiring prescribed data;
detecting a possibility as to whether a prescribed attack associated with learning has been made on the prescribed data using the prescribed detection method; and
specifying, when the possibility of the prescribed attack is detected, a first defense algorithm capable of making a defense against the prescribed attack from among the plurality of defense algorithms on the basis of the prescribed data on which the prescribed attack has been possibly made.

**Claims**

1. An information processing apparatus comprising a memory and at least one processor,

the memory storing
a first inference model using a neural network, and
a plurality of defense algorithms,
the at least one processor performing
acquisition of prescribed data,
input of the prescribed data to the first inference model to perform inference processing, the first inference model being learned using learning data including respective data and respective result data obtained by solving prescribed problems using the respective data,
detection of a possibility as to whether a prescribed attack has been made on the prescribed data,
specification of, when the possibility of the prescribed attack is detected, a first defense algorithm capable of making a defense against the prescribed attack from among the plurality of defense algorithms on a basis of the prescribed data on which the prescribed attack has been made, and
application of the first defense algorithm to the inference processing.

2. The information processing apparatus according to claim 1, wherein

the memory stores a second inference model using a neural network, and

the specification includes performing input of the prescribed data to the second inference model to predict the first defense algorithm, the second inference model being generated by supervised learning by using learning data including respective data, on which the prescribed attack has been made, and respective defense algorithms applied to the respective data.

**3.** The information processing apparatus according to claim 1, wherein

the memory stores a third inference model using a neural network, and
the specification includes performing input of the prescribed data to the third inference model to predict a first attack algorithm, the third inference model being generated by supervised learning by using learning data including respective attack algorithms and respective data, on which respective attacks based on the respective attack algorithms have been made.

**4.** The information processing apparatus according to claim 1, wherein

the at least one processor further performs calculation of, when the possibility of the prescribed attack is detected, a feature amount of the prescribed data including the prescribed attack, and
the specification includes performing specification of the first defense algorithm on a basis of the feature amount.

**5.** The information processing apparatus according to claim 4, wherein

the memory stores a fourth inference model using a neural network, and
the specification includes performing input of the calculated feature amount to the fourth inference model to predict the first defense algorithm, the fourth inference model being generated by supervised learning by using learning data including respective feature amounts and respective defense algorithms corresponding to the feature amounts.

**6.** The information processing apparatus according to claim 4, wherein
the performing of the specification includes performing specification of a first attack algorithm corresponding to the prescribed attack from among a plurality of attack algorithms on a basis of the calculated feature amount.

**7.** The information processing apparatus according to claim 6, wherein

the memory stores a fifth inference model using a neural network, and
the performing of the specification includes performing input of the calculated feature amount to the fifth inference model to predict the first attack algorithm, the fifth inference model being generated by supervised learning by using learning data including respective feature amounts and respective attack algorithms corresponding to the respective feature amounts.

**8.** The information processing apparatus according to claim 3 or 7, wherein

the memory stores a sixth inference model using a neural network, and
the performing of the specification includes performing input of the first attack algorithm to the sixth inference model to predict the first defense algorithm, the sixth inference model being generated by supervised learning by using learning data including respective attack algorithms and respective data in which respective defense algorithms are applied to respective data on which attacks have been made by the respective attack algorithms.

**9.** An information processing method comprising, by at least one processor included in an information processing apparatus including a memory that stores a first inference model using a neural network and a plurality of defense algorithms:

acquiring prescribed data;
inputting the prescribed data to the first inference model to perform inference processing, the first inference model being learned by using learning data including respective data and respective result data;
detecting a possibility as to whether a prescribed attack has been made on the prescribed data;
specifying, when the possibility of the prescribed attack is detected, a first defense algorithm capable of making a defense against the prescribed attack from among the plurality of defense algorithms on a basis of the prescribed data on which the prescribed attack has been made; and

applying the first defense algorithm to the inference processing.

10. A non-transitory computer-readable storage medium storing a program for causing at least one processor, which is provided in an information processing apparatus including a memory that stores a first inference model using a neural network and a plurality of defense algorithms, to perform:

acquisition of prescribed data;
input of the prescribed data to the first inference model to perform inference processing, the first inference model being learned by using learning data including respective data and respective result data;
detection of a possibility as to whether a prescribed attack has been made on the prescribed data;
specification of, when the possibility of the prescribed attack is detected, a first defense algorithm capable of making a defense against the prescribed attack from among the plurality of defense algorithms on a basis of the prescribed data on which the prescribed attack has been made; and
application of the first defense algorithm to the inference processing.

# Fig. 1

# Fig. 2

10

10a — CPU

10b — RAM

10c — ROM

10d — COMMUNICATION UNIT

10e — INPUT UNIT

10f — DISPLAY UNIT

# Fig. 3

# Fig. 4

Attack

Defense

INFER

DETECT

OUTPUT

DOG

# Fig. 5A

| CORRESPONDING DATA A | | | |
|---|---|---|---|
| ID | FEATURE AMOUNT | DEFENSE ID | · · · |
| 010 | C10 | D20 | · · · |
| 011 | C12, C13 | D22, D23 | · · · |
| · · · | · · · | · · · | · · · |

# Fig. 5B

| CORRESPONDING DATA B1 | | |
|---|---|---|
| ID | FEATURE AMOUNT | ATTACK ID |
| 001 | C1 | A11 |
| 002 | C2, C3 | A12, A13 |
| . . . | . . . | . . . |

# Fig. 5C

| CORRESPONDING DATA B2 | |
|---|---|
| ATTACK ID | DEFENSE ID |
| A11 | D11 |
| A12 | D12, D13 |
| . . . | . . . |

# Fig. 6

SERVER 10

USER TERMINAL 20

TRANSMIT DATA — S102

INFER — S104

DETECT — S106

DEFENSE PROCESSING — S108

TRANSMIT RESULT DATA OF INFERENCE — S110

# Fig. 7

```
            ┌──────────────┐
            │    START     │
            └──────────────┘
                   │
                   ▼           S202
              ◇ PRESCRIBED ◇────── NO ──────┐
              ◇ ATTACK MADE ◇                │
              ◇     ?      ◇                 │
                   │                         │
                  YES                        │
                   ▼                         │
        ┌──────────────────┐  S204           │
        │ SPECIFY DEFENSE  │                 │
        │    ALGORITHM     │                 │
        └──────────────────┘                 │
                   │                         │
                   ▼                         │
        ┌──────────────────┐  S206           │
        │  APPLY DEFENSE   │                 │
        │    ALGORITHM     │                 │
        └──────────────────┘                 │
                   │                         │
                   ▼                         │
        ┌──────────────────┐  S208           │
        │      INFER       │                 │
        └──────────────────┘                 │
                   │                         │
                   ◄─────────────────────────┘
                   │
                   ▼
            ┌──────────────┐
            │     END      │
            └──────────────┘
```

# Fig. 8

| | | FIRST DEFENSE METHOD | | | | SECOND DEFENSE METHOD | | |
|---|---|---|---|---|---|---|---|---|
| DATA SET USED IN LEARNING | | ImageNet | | | | CoCo | | |
| DATA SET USED IN EVALUATION | | ImageNet | | | | | | |
| ATTACK METHOD | | PGD | PGD | PGD | PGD | FGSM | PGD | PGD* |
| ATTACK METHOD USED IN LEARNING DEFENSE AI | | NONE | | | | FGSM | PGD | PGD |
| A ACCURACY OF CLEAN IMAGE [%] | - | 68.8 | 68.3 | 69.4 | 68.9 | 75.6 | 75.6 | 75.6 |
| | WHERE Clean IMAGE IS SUBJECTED TO Purifier | - | - | - | - | - | - | 69 |
| B ACCURACY WITHOUT DEFENSE [%] | | 0 | 0 | 0 | 0 | 39 | 0 | 0 |
| C ACCURACY WITH DEFENSE [%] | | 33 | 34.5 | 35.8 | 36.9 | 73.4 | 37.6 | 42.6 |
| ATTACK RESISTANCE | a)FIRST INDEX (ESTIMATED) (A-C) | 35.8 | 33.8 | 33.6 | **32** | 2.2 | 38 | 33 |
| | b)SECOND INDEX (USE C) | 33 | 34.5 | 35.8 | 36.9 | 73.4 | 37.6 | **42.6** |
| | c)RECOVERY RATE (C-B) | 33 | 34.5 | 35.8 | 36.9 | 34.4 | 37.6 | **42.6** |
| | d)RECOVERY RATE WITH CORRECTION (c) x (A-B)/100) | 22.7 | 23.6 | 24.8 | 25.4 | 12.6 | 28.4 | **32.2** |

EP 4 125 004 A1

Europäisches
Patentamt

European
Patent Office

Office européen
des brevets

## EUROPEAN SEARCH REPORT

Application Number

EP 22 18 4498

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/159924 A1 (TRAN NGOC MINH [IE] ET AL) 21 May 2020 (2020-05-21) * paragraph [0047] – paragraph [0049] * * figure 4 * ───── | 1-10 | INV. G06N3/04 G06F21/55 G06N3/08 |
| A | DE 10 2019 204318 A1 (CONTI TEMIC MICROELECTRONIC GMBH [DE]) 1 October 2020 (2020-10-01) * paragraph [0016] – paragraph [0017] * * figure 4 * ───── | 3,4,6,7 | |
| X | CN 108 549 940 A (UNIV ZHEJIANG) 18 September 2018 (2018-09-18) * abstract * ───── | 1,9,10 | |

TECHNICAL FIELDS
SEARCHED      (IPC)

G06N
G06F

The present search report has been drawn up for all claims

| Place of search | Date of completion of the search | Examiner |
|---|---|---|
| The Hague | 19 December 2022 | Keresztury, Bence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 4498

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2022

| Patent document cited in search report | Publication date | Patent family member(s) | Publication date |
|---|---|---|---|
| US 2020159924 A1 | 21-05-2020 | NONE | |
| DE 102019204318 A1 | 01-10-2020 | CN 113474792 A | 01-10-2021 |
| | | DE 102019204318 A1 | 01-10-2020 |
| | | DE 112020001597 A5 | 24-02-2022 |
| | | JP 2022519868 A | 25-03-2022 |
| | | US 2022174089 A1 | 02-06-2022 |
| | | WO 2020192849 A1 | 01-10-2020 |
| CN 108549940 A | 18-09-2018 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021096854 A

**Non-patent literature cited in the description**

- **TE JUIN LESTER TAN ; REZA SHOKRI.** Bypassing Backdoor Detection Algorithms in Deep Learning. *IEEE European Symposium on Security and Privacy,* 06 June 2020, 175-183
- **X. CIHANG et al.** Smooth adversarial training. *arXiv:2006.14536,* 2020
- **N. MUZAMMAL et al.** A self-supervised approach for adversarial robustness. *Proceedings of the IEEE/CVF Conference on Computer Vision and Pattern Recognition,* 2020